# FASCICULE DE BREVET EUROPEEN

(11) **EP 0 857 602 B1**
(45) Date de publication et mention de la délivrance du brevet: **10.04.2002**
(21) Numéro de dépôt: 98101162.0
(22) Date de dépôt: 23.01.1998
(51) Int. Cl.: B60K 15/04, B65D 90/46

(54) **Dispositif de remplissage d'un réservoir de carburant de véhicule automobile comportant des moyens perfectionnés de mise à la masse électrique**
Vorrichtung zum Füllen eines Kraftstofftanks eines Kraftfahrzeuges versehen mit verbesserten Mitteln zur Erdung
Motor vehicle fuel tank filler device comprising improved earthing means

(30) Priorité: 05.02.1997 FR 9701399
(43) Date de publication de la demande: 12.08.1998
(73) Titulaire: Compagnie de Matériel et d'Equipements Techniques C.O.M.E.T., 60300 Senlis (FR)
(72) Inventeur: Romanek, Christian, 60430 Noailles (FR); Lefevre, Jean-Pierre, 60240 Lattainville (FR); Gallant, Didier, 60590 Eragny/Epte (FR)
(74) Mandataire: Rinuy, Santarelli

(56) Documents cités:
- EP-A- 0 748 712
- US-A- 3 967 660
- US-A- 4 946 060

## Description

L'invention concerne un dispositif de remplissage d'un réservoir de carburant pour véhicule automobile comportant des moyens perfectionnés de mise à la masse électrique.

L'invention concerne plus particulièrement un dispositif de remplissage d'un réservoir de carburant de véhicule automobile, du type comportant une tubulure de remplissage dont une extrémité inférieure débouche dans le réservoir et dont une extrémité supérieure est reliée à une tête de remplissage réalisée en matériau plastique, du type dans lequel la tête comporte un orifice supérieur d'introduction de la lance d'un pistolet d'alimentation en carburant, et du type dans lequel il est prévu des moyens d'obturation de l'orifice supérieur.

Un dispositif de ce type est connu du document US-4,946,060.

Les dispositifs de remplissage de réservoir sont pour la plupart réalisés en matière plastique, ce qui permet d'une part d'en abaisser le poids et le coût et, d'autre part, de mieux pouvoir adapter la forme du dispositif aux contraintes d'encombrement liées à l'implantation du dispositif dans le véhicule.

Un problème de sécurité important se pose lorsque le réservoir de carburant est rempli à l'aide d'un pistolet distributeur dont une lance est introduite dans la tête de remplissage.

En effet, il peut exister, soit au niveau de la tête de remplissage, soit au niveau du pistolet, des charges électriques, par exemple de nature électrostatique, qui sont susceptibles de provoquer un arc électrique lorsque le pistolet est approché du véhicule et notamment de la tête de remplissage.

Or, lorsque les moyens d'obturation du dispositif de remplissage ont été retirés, les vapeurs contenues dans le réservoir, qui sont essentiellement constituées d'un mélange d'air et d'hydrocarbures, tendent à s'évacuer du réservoir par la tête de remplissage et se retrouvent donc particulièrement concentrées autour de cette dernière.

Ainsi, le déclenchement d'un arc électrique pourrait provoquer l'inflammation de ces vapeurs, voire l'explosion du réservoir.

Afin de limiter ce risque, l'invention propose un dispositif de remplissage d'un réservoir de carburant de véhicule automobile, du type comportant une tubulure de remplissage dont une extrémité inférieure débouche dans le réservoir et dont une extrémité supérieure est reliée à une tête de remplissage réalisée en matériau plastique, du type dans lequel la tête comporte un orifice supérieur d'introduction de la lance d'un pistolet d'alimentation en carburant, et du type dans lequel il est prévu des moyens d'obturation de l'orifice supérieur, du type décrit précédemment, le dispositif de remplissage comportant un élément de contact qui est réalisé en matériau conducteur de l'électricité, qui est relié électriquement à la masse électrique du véhicule, et qui est agencé au niveau de l'orifice supérieur d'introduction du pistolet pour que ce dernier vienne au contact de l'élément de contact lors de son introduction dans la tête de remplissage, la tête de remplissage comportant une douille tubulaire qui est orientée sensiblement selon une direction axiale générale de la tête, une extrémité supérieure de la douille délimitant l'orifice supérieur d'introduction du pistolet, et une extrémité inférieure de la douille débouchant à l'intérieur de la tête, caractérisé en ce que l'élément de contact comporte une surface conique formant un entonnoir, et formant une surface de guidage de la lance du pistolet.

Selon d'autres caractéristiques de l'invention :
- l'élément de contact est réalisé sous la forme d'une coupelle qui recouvre, au moins partiellement, un bord supérieur de la douille ;
- les moyens de verrouillage comportent un volet qui est articulé dans la tête de remplissage entre une position fermée, dans laquelle il est reçu de manière étanche dans la douille, et une position ouverte dans laquelle il est escamoté vers l'intérieur de la tête par le pistolet qui est introduit au travers de la douille, et en ce que le volet comporte une face externe sur laquelle le pistolet agit pour provoquer l'ouverture du volet et qui s'étend, en position fermée du volet, transversalement dans la douille sensiblement au niveau de l'orifice supérieur, à proximité de la coupelle de mise à la masse ;
- la coupelle comporte une surface conique qui forme un entonnoir et qui est prolongée par une jupe cylindrique qui s'étend axialement à l'intérieur de la douille, et la surface externe du volet s'étend au niveau de la jupe cylindrique de manière que la surface conique de la coupelle guide le pistolet vers l'intérieur de la douille en direction de la surface externe du volet ;
- la coupelle comporte un flasque transversal qui s'étend radialement vers l'extérieur et qui est agencé axialement entre une face transversale supérieure de la tête de remplissage et une face interne d'un panneau d'habillage qui est solidaire de la carrosserie du véhicule et qui est muni d'une ouverture dans laquelle-débouche l'orifice supérieur de la douille de la tête de remplissage ;
- l'élément de contact est réalisé sous la forme d'un insert autour duquel la douille de la tête de remplissage est surmoulée ;
- les moyens d'obturation comportent un bouchon qui est introduit depuis l'extérieur dans la douille et qui coopère pour sa fixation en position fermée avec des moyens d'accrochage qui s'étendent radialement vers l'intérieur dans la douille et qui sont réalisés venus de matière avec l'insert ;
- le bouchon est fixé en position fermée par deux ergots qui s'étendent radialement vers l'extérieur et qui coopèrent avec des faces transversales inférieures de deux rampes de l'insert qui s'étendent selon un arc de cercle radialement vers l'intérieur dans la douille et qui sont séparées par deux espaces qui permettent le passage des ergots lors de l'introduction du bouchon dans la douille ;
- l'insert comporte une broche qui s'étend radialement vers l'extérieur, hors de la douille, et qui est reliée électriquement à la masse du véhicule.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en coupe axiale éclatée d'un dispositif de remplissage conforme aux enseignements de l'invention ;
- la figure 2 est une vue en coupe axiale montée du dispositif de la figure 1;
- la figure 3 est une vue similaire à celle de la figure 2 illustrant un deuxième mode de réalisation de l'invention ;
- la figure 4 est une vue de dessus du dispositif de la figure 3 ; et
- la figure 5 est une vue en perspective avec arrachement de l'insert du dispositif de la figure 3.

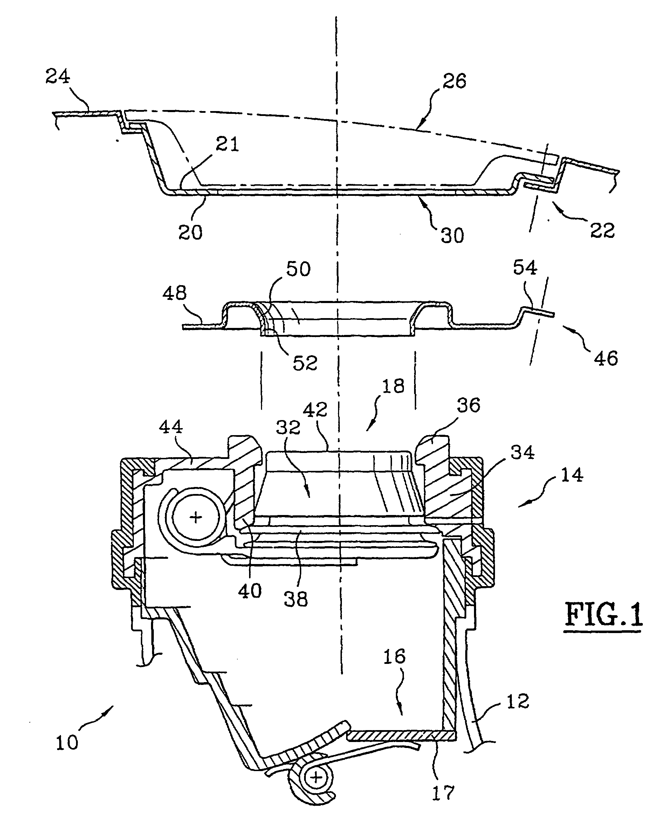

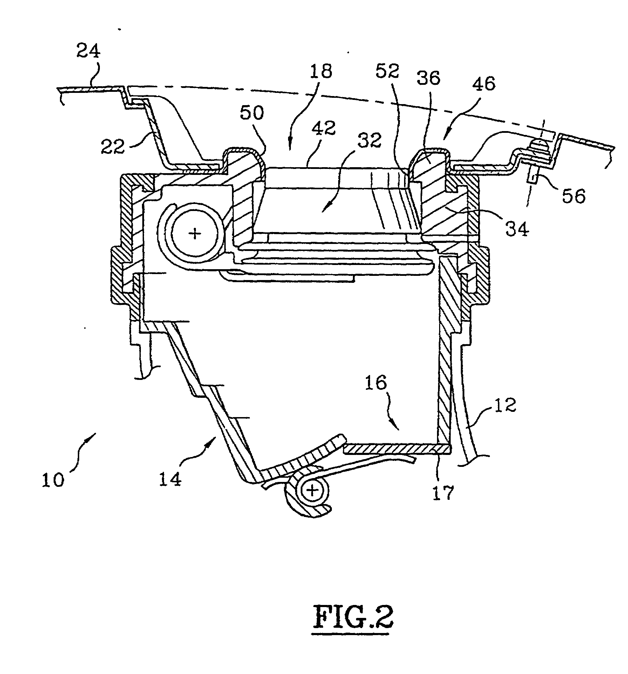

On a représenté sur les figures 1 et 2 un dispositif 10 pour le remplissage d'un réservoir de carburant (non représenté) de véhicule automobile.

On a plus particulièrement représenté l'extrémité supérieure d'une tubulure de remplissage 12 dont l'extrémité inférieure (non représentée) débouche dans le réservoir. Sur l'extrémité supérieure de la tubulure de remplissage 12, il est monté une tête de remplissage 14 qui comporte essentiellement un orifice inférieur 16 de communication avec l'intérieur de la tubulure 12 et un orifice supérieur circulaire 18 qui permet l'introduction, depuis l'extérieur du véhicule et sensiblement selon une direction axiale de la tête 14, de la lance d'un pistolet d'alimentation en carburant (non représenté).

De manière connue, la tête de remplissage 14 et la tubulure 12 sont réalisées en matière plastique.

La tête de remplissage 14 est agencée du côté d'une face transversale interne 20 d'une paroi transversale de fond 21 d'un bol 22 qui forme un renfoncement par rapport à une face externe d'un panneau de carrosserie 24 sur lequel le bol 22 est fixé. Ce renfoncement est par exemple destiné à être fermé par une trappe articulée 26 dont une face externe est agencée, lorsque la trappe 26 est en position fermée, dans le prolongement de la face externe du panneau de carrosserie 24 pour dissimuler l'orifice supérieur 18 d'accès au dispositif de remplissage 10.

Le bol 22 comporte en effet, dans la paroi transversale de fond 21, une ouverture circulaire 30 qui permet l'accès depuis l'extérieur à l'orifice supérieur 18.

La tête de remplissage 14 comporte également des moyens pour l'obturation de l'orifice supérieur 18 comportant essentiellement un volet escamotable 32 qui est articulé autour d'un axe à l'intérieur de la tête de remplissage 14 entre une position fermée représentée aux figures 1 et 2 et une position ouverte (non représentée).

En position fermée, le volet 32 est reçu à l'intérieur d'une douille sensiblement cylindrique 34 dont un bord supérieur 36 délimite l'orifice supérieur 18. Un joint d'étanchéité 38 coopère alors avec un bord inférieur 40 de la douille 34 pour obturer de manière étanche la tête de remplissage 14.

En position ouverte, le volet 32 est escamoté à l'intérieur de la tête de remplissage 14 pour permettre le passage de la lance du pistolet.

Une telle conception des moyens d'obturation permet notamment de ne pas nécessiter l'ouverture préalable d'un bouchon du dispositif de remplissage avant l'introduction du pistolet. En effet, le volet 32 est susceptible d'être escamoté par la lance le pistolet qui agit contre une face externe 42 du volet 32 lorsque l'on introduit le pistolet au travers de l'orifice supérieur 18.

L'orifice inférieur 16 de la tête de remplissage 14 est ici refermé par un clapet escamotable 17 qui est destiné à être ouvert par la lance du pistolet afin de permettre l'alimentation du réservoir en carburant. Le diamètre de l'ouverture inférieure 16 est choisi de manière à former un détrompeur pour n'autoriser le ravitaillement du réservoir qu'avec un pistolet dont la lance est de diamètre inférieur au diamètre de l'orifice 16. A défaut, le clapet 17 ne peut être ouvert et provoque le refoulement du carburant vers l'extérieur, ce qui provoque l'arrêt automatique de la distribution.

L'orifice inférieur 16 et son clapet 17 forment ainsi un détrompeur qui permet de ne remplir le réservoir qu'avec un carburant adapté au moteur du véhicule automobile.

Comme on peut le voir sur les figures, le bord supérieur 36 de la douille 34 de la tête de remplissage 14 est agencé axialement en saillie par rapport à une paroi transversale supérieure 44 de la tête 14 qui est en appui contre la paroi transversale de fond 21 du bol 22.

Le bord supérieur 36 est ainsi amené à dépasser légèrement du côté externe de la paroi transversale de fond 21 du bol 22, au travers de l'ouverture 30 de celui-ci.

Conformément aux enseignements de l'invention, il est prévu des moyens de mise à la masse électrique du dispositif de remplissage qui permettent d'éviter l'apparition d'un arc électrique entre le pistolet et le dispositif 10 lors du remplissage du réservoir.

Dans ce premier exemple de réalisation de l'invention, il est ainsi prévu une coupelle 46 circulaire réalisée en un matériau conducteur de l'électricité, par exemple en métal, et qui vient recouvrir le bord supérieur 36 de la douille 34. La coupelle 46 est reçue au travers de l'ouverture 30 du bol 22 et son profil est complémentaire de celui du bord supérieur 36 de la douille 34.

La coupelle 46 est prolongée radialement vers l'extérieur par un flasque transversal annulaire 48 qui est serré axialement entre la paroi transversale supérieure 44 de la tête 14 et la paroi transversale de fond 21 du bol 22 de sorte qu'elle assure la fixation de la coupelle 46.

La coupelle 46 comporte notamment une surface conique 50 qui forme un entonnoir et qui est prolongée par une jupe cylindrique 52 qui s'étend axialement vers l'intérieur dans la douille 34, au travers de l'orifice supérieur 18 du dispositif 10.

Comme on peut le voir sur la figure 2, en position fermée du volet 32, la surface externe 42 de celui-ci s'étend sensiblement au niveau de la jupe cylindrique 52, c'est-à-dire axialement en retrait vers l'intérieur par rapport à la surface conique de guidage 50. La surface conique 50 et la jupe cylindrique 52 forment ainsi des surfaces de guidage de la lance du pistolet lorsque l'on veut l'introduire dans la tête de remplissage 14.

La coupelle 46 présente l'avantage de protéger de manière efficace le bord supérieur 36 de la douille 34 contre les chocs dus à l'introduction du pistolet au travers de l'orifice supérieur 18.

La coupelle 46 comporte par ailleurs une patte de liaison 54 qui s'étend radialement vers l'extérieur depuis le flasque annulaire 48 et qui permet d'assurer la mise à la masse électrique de la coupelle 46. Dans l'exemple de réalisation représenté sur les figures 1 et 2, la patte de liaison 54 s'étend le long de la paroi transversale de fond 21 du bol 22 et elle est reliée directement à l'élément de carrosserie 24 sur lequel est monté le bol 22.

Avantageusement, la patte de fixation 54 est interposée entre le bol 22 et l'élément de carrosserie 24 au niveau d'une vis de fixation 56 du bol 22, ce qui assure un très bon contact électrique entre la patte de liaison 54 et l'élément de carrosserie 24.

Dans l'exemple de réalisation des figures 1 et 2, la coupelle 46 est ainsi destinée à être fixée d'abord sur le bol 22 avant le montage de la tête de remplissage 14. Bien évidemment, on peut également prévoir d'autres modes de réalisation dans lesquels la coupelle 46 serait fixée sur la tête de remplissage 14.

Selon ce premier mode de réalisation de l'invention, le pistolet de ravitaillement en carburant est destiné à venir au contact de la coupelle 46 avant toute ouverture du volet 32, si bien que l'équilibrage des potentiels entre le pistolet et le dispositif de remplissage 10 a lieu avant l'ouverture de ce dernier, ce qui élimine tout risque de mise à feu des vapeurs d'essence contenues dans le réservoir.

Par ailleurs, lors du ravitaillement, le pistolet est généralement en contact avec la coupelle 46 de sorte que le pistolet reste relié à la masse électrique du véhicule durant toute l'opération de ravitaillement.

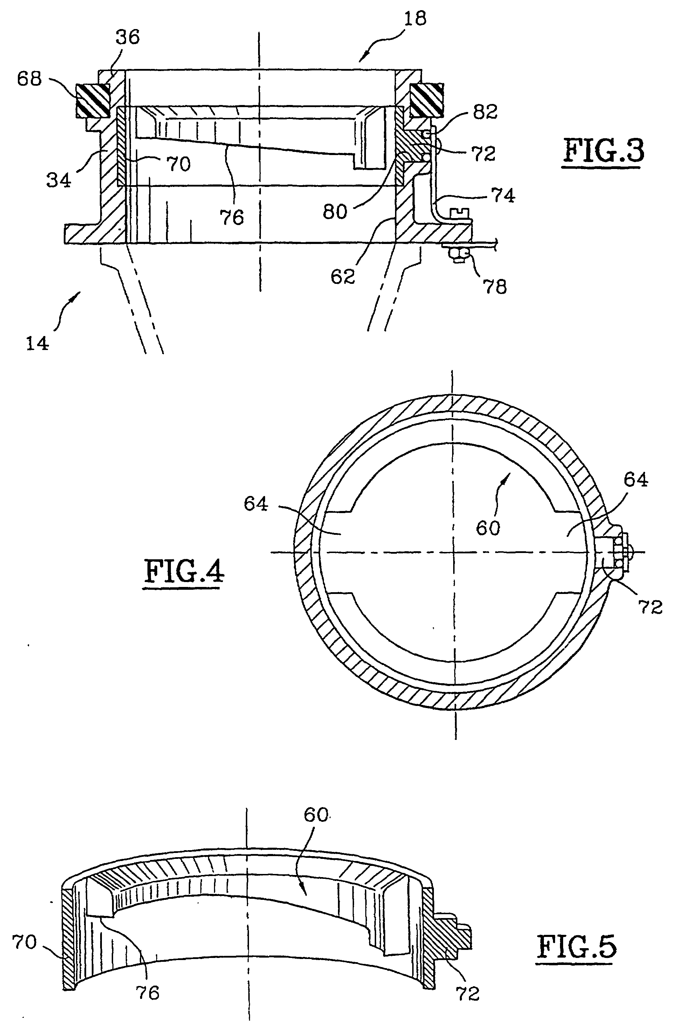

Un deuxième mode de réalisation de l'invention est représenté sur les figures 3 à 5 dans lesquelles des éléments identiques ou similaires à ceux représentés sur les figures 1 et 2 sont désignés par les mêmes chiffres de référence.

Dans ce second mode de réalisation de l'invention, les moyens d'obturation de la tête de remplissage comportent un bouchon (non représenté) de type traditionnel qui est amovible et qui est fixé depuis l'extérieur sur l'orifice supérieur 18 de la tête de remplissage 14 par un dispositif à baïonnette.

Sur les figures 3 à 5, on n'a représenté que la partie supérieure de la tête de remplissage 14 qui comporte notamment une douille 34 sensiblement cylindrique dont le bord supérieur 36 délimite l'orifice supérieur 18.

Le bouchon comporte un pied central qui est destiné à être introduit axialement à l'intérieur de la douille 34 et qui comporte deux ergots qui s'étendent radialement vers l'extérieur et qui sont destinés à coopérer avec des rampes 60 qui s'étendent radialement vers l'intérieur depuis une face cylindrique interne 62 de la douille 34. Les rampes 60, au nombre de deux et agencées symétriquement, s'étendent chacune sur un arc de cercle et elles sont séparées l'une de l'autre par deux espaces 64 qui permettent le passage axial des ergots du bouchon lors de l'introduction et de l'enlèvement de celui-ci.

Ces ergots sont destinés à coopérer avec une face inférieure hélicoïdale 76 des rampes 60 de manière que, par rotation du bouchon, celui-ci soit déplacé axialement vers l'intérieur par rapport à la douille 34 pour forcer une embase de celui-ci à coopérer avec un joint d'étanchéité 68 agencé à l'extrémité supérieure de la douille 34.

Selon l'invention, les rampes 60 sont réalisées venues de matière avec un insert 70 en matériau conducteur de l'électricité autour duquel est surmoulée la douille 34.

L'insert 70 comporte une broche cylindrique 72 qui s'étend radialement vers l'extérieur au travers d'un logement cylindrique 80 de la douille 34 pour permettre la fixation d'une patte de liaison 74 destinée à être raccordée électriquement à la masse du véhicule, par exemple à un élément de carrosserie de celui-ci.

Pour éviter que des vapeurs d'hydrocarbures puissent suinter vers l'extérieur du dispositif 10 entre la broche 72 et la douille 34, la broche 72 comporte une extrémité radiale externe de diamètre rétréci sur lequel est monté un joint d'étanchéité torique 82 qui est serré radialement entre la broche 72 et le logement 80.

Dans l'exemple de réalisation représenté sur la figure 3, la patte de liaison est rivetée par une extrémité sur la broche 72 et elle reliée électriquement à la masse du véhicule par le biais d'une vis de fixation 78 de la tête de remplissage 14 sur un élément de carrosserie (non représenté) du véhicule.

Eventuellement, la patte de liaison peut être réalisée venue de matière avec l'insert 70 et être au moins partiellement noyée dans la douille 34 sauf à une extrémité de raccordement au niveau de laquelle la patte de liaison est en contact avec la carrosserie du véhicule.

Les rampes d'accrochage 60 du bouchon qui s'étendent sensiblement sur toute la périphérie de la douille 34 forment également des points d'accrochage pour le pistolet de ravitaillement si celui-ci est muni de griffes adéquates.

Dans tous les cas, le pistolet est généralement au contact des rampes 60 pendant tout le ravitaillement, ce qui assure sa mise à la masse électrique au cours de cette opération.

La réalisation des rampes 60 venues de matière avec un insert 70 permet de choisir le matériau de l'insert 70, d'une part en fonction de sa capacité à conduire le courant électrique, et d'autre part en fonction de sa résistance mécanique aux efforts et à l'usure dus à la mise en place et à l'enlèvement du bouchon. La tête de remplissage 14 peut alors être réalisée en un matériau répondant à d'autres critères tels que le prix de revient, la facilité de mise en oeuvre, ou la compatibilité avec le matériau constituant la tubulure 12 en vue de leur assemblage par soudage.

## Revendications

1. Dispositif de remplissage d'un réservoir de carburant de véhicule automobile, du type comportant une tubulure de remplissage (12) dont une extrémité inférieure débouche dans le réservoir et dont une extrémité supérieure est reliée à une tête de remplissage (14) réalisée en matériau plastique, du type dans lequel la tête (14) comporte un orifice supérieur (18) d'introduction de la lance d'un pistolet d'alimentation en carburant, et du type dans lequel il est prévu des moyens d'obturation (32) de l'orifice supérieur (18), le dispositif de remplissage comportant un élément de contact (46, 60) qui est réalisé en matériau conducteur de l'électricité, qui est relié électriquement à la masse électrique du véhicule, et qui est agencé au niveau de l'orifice supérieur (18) d'introduction du pistolet pour que ce dernier vienne au contact de l'élément de contact (46, 60) lors de son introduction dans la tête de remplissage (14), la tête de remplissage (14) comportant une douille tubulaire (34) qui est orientée sensiblement selon une direction axiale générale de la tête (14), une extrémité supérieure (36) de la douille (34) délimitant l'orifice supérieur (18) d'introduction du pistolet, et une extrémité inférieure de la douille débouchant à l'intérieur de la tête (14), **caractérisé en ce que** l'élément de contact (46, 60) comporte une surface conique (50) formant un entonnoir, et formant une surface de guidage de la lance du pistolet.

2. Dispositif de remplissage selon la revendication 1, **caractérisé en ce que** l'élément de contact est réalisé sous la forme d'une coupelle (46) qui recouvre, au moins partiellement, un bord supérieur (36) de la douille (34).

3. Dispositif de remplissage selon la revendication 2, **caractérisé en ce que** les moyens de verrouillage comportent un volet (32) qui est articulé dans la tête de remplissage entre une position fermée, dans laquelle il est reçu de manière étanche dans la douille (34), et une position ouverte dans laquelle il est escamoté vers l'intérieur de la tête par le pistolet qui est introduit au travers de la douille, et **en ce que** le volet (32) comporte une face externe (42) sur laquelle le pistolet agit pour provoquer l'ouverture du volet (32) et qui s'étend, en position fermée du volet (32), transversalement dans la douille (34) sensiblement au niveau de l'orifice supérieur (18), à proximité de la coupelle (46) de la mise à la masse,

4. Dispositif de remplissage selon la revendication 3, **caractérisé en ce que** la coupelle (46) comporte une surface conique (50) qui forme un entonnoir et qui est prolongée par une jupe cylindrique (52) qui s'étend axialement à l'intérieur de la douille (34), et **en ce que** la surface externe (42) du volet (32) s'étend au niveau de la jupe cylindrique (52) de manière que la surface conique (50) de la coupelle guide le pistolet vers l'intérieur de la douille (34) en direction de la surface externe (42) du volet (32).

5. Dispositif de remplissage selon l'une quelconque des revendications 2 à 4, **caractérisé en ce que** la coupelle (46) comporte un flasque transversal (48) qui s'étend radialement vers l'extérieur et qui est agencé axialement entre une face transversale supérieure (44) de la tête de remplissage (14) et une face interne (21) d'un panneau d'habillage (22) qui est solidaire de la carrosserie du véhicule et qui est muni d'une ouverture (30) dans laquelle débouche l'orifice supérieur (18) de la douille (34) de la tête de remplissage (14).

6. Dispositif de remplissage selon la revendication 1, **caractérisé en ce que** l'élément de contact est réalisé sous la forme d'un insert (70) autour duquel la douille de la tête de remplissage (14) est surmoulée.

7. Dispositif de remplissage selon la revendication 6, **caractérisé en ce que** les moyens d'obturation comportent un bouchon qui est introduit depuis l'extérieur dans la douille (34) et qui coopère pour sa fixation en position fermée avec des moyens d'accrochage (60) qui s'étendent radialement vers l'intérieur dans la douille (34) et qui sont réalisés venus de matière avec l'insert (70).

8. Dispositif de remplissage selon la revendication 7, **caractérisé en ce que** le bouchon est fixé en position fermée par deux ergots qui s'étendent radialement vers l'extérieur et qui coopèrent avec des faces transversales inférieures (76) de deux rampes (60) de l'insert (70) qui s'étendent selon un arc de cercle radialement vers l'intérieur dans la douille (34) et qui sont séparées par deux espaces (64) qui permettent le passage des ergots lors de l'introduction du bouchon dans la douille (34).

9. Dispositif de remplissage selon l'une quelconque des revendications 6 à 8, **caractérisé en ce que** l'insert (70) comporte une broche (72) qui s'étend radialement vers l'extérieur, hors de la douille (34), et qui est reliée électriquement à la masse du véhicule.

## Claims

1. Filler device for a motor vehicle fuel tank, of the type including a filler pipe (12), a lower end of which opens into the tank and an upper end of which is connected to a filler head (14) made of plastics material, of the type in which the head (14) includes an upper orifice (18) for introduction of the lance of a fuel supply gun, and of the type in which means (32) are provided for closure of the upper orifice (18), the filler device including a contact element (46, 60) which is made of electrically conductive material, which is electrically connected to the electrical ground of the vehicle, and which is arranged at the level of the upper orifice (18) for introduction of the gun so that the latter comes into contact with the contact element (46, 60) on its introduction into the filler head (14), the filler head (14) including a tubular socket (34) which is oriented substantially in a general axial direction of the head (14), an upper end (36) of the socket (34) defining the upper orifice (18) for introduction of the gun, and a lower end of the socket opening inside the head (14), **characterised by** the fact that the contact element (46, 60) includes a conical surface (50) forming a funnel, and forming a surface for guiding the lance of the gun.

2. Filler device as described in claim 1, **characterised by** the fact that the contact element is made in the form of a bowl (46) which, at least partially, covers an upper edge (36) of the socket (34).

3. Filler device as described in claim 2, **characterised by** the fact that the locking means include a shutter (32) which is hinged in the filler head between a closed position, in which it is received in tight manner in the socket (34), and an open position in which it is retracted towards the inside of the head by the gun which is introduced through the socket, and by the fact that the shutter (32) includes an external face (42) on which the gun acts to cause the opening of the shutter (32) and which, in the closed position of the shutter (32), extends transversally in the socket (34) substantially at the level of the upper orifice (18), in the vicinity of the grounding bowl (46).

4. Filler device as described in claim 3, **characterised by** the fact that the bowl (46) includes a conical surface (50) which forms a funnel and which is extended by a cylindrical skirt (52) which extends axially inside the socket (34), and by the fact that the external surface (42) of the shutter (32) extends at the level of the cylindrical skirt (52) so that the conical surface (50) of the bowl guides the gun towards the inside of the socket (34) in the direction of the external surface (42) of the shutter (32).

5. Filler device as described in any one of claims 2 to 4, **characterised by** the fact that the bowl (46) includes a transversal flange (48) which extends radially outwardly and which is arranged axially between an upper transversal face (44) of the filler head (14) and an inner face (21) of a trim panel (22) which is firmly attached to the bodywork of the vehicle and which is provided with an opening (30) into which opens the upper orifice (18) of the socket (34) of the filler head (14).

6. Filler device as described in claim 1, **characterised by** the fact that the contact element is made in the form of an insert (70) around which the socket of the filler head (14) is over-moulded.

7. Filler device as described in claim 6, **characterised by** the fact that the closure means include a plug which is introduced from the outside into the socket (34) and which co-operates, for fixing it in the closed position, with catching means (60) which extend radially inwardly in the socket (34) and which are made in one piece with and of the same material as the insert (70).

8. Filler device as described in claim 7, **characterised by** the fact that the plug is fixed in the closed position by two lugs which extend radially outwardly and which co-operate with lower transversal faces (76) of two inclines (60) of the insert (70) which extend in an arc of circle radially inwardly in the socket (34) and which are separated by two spaces (64) which allow passage of the lugs on introduction of the plug into the socket (34).

9. Filler device as described in any one of claims 6 to 8, **characterised by** the fact that the insert (70) includes a pin (72) which extends radially outwardly, outside the socket (34), and which is electrically connected to the ground of the vehicle.

## Patentansprüche

1. Füllvorrichtung für einen Kraftfahrzeug-Kraftstoffspeicher, mit einem Füllrohr (12), dessen unteres Ende in dem Speicher mündet und dessen oberes Ende mit einem Füllkopf (14) aus Kunststoff verbunden ist, der Art, bei der der Füllkopf (14) eine obere Öffnung (18) zum Einführen der Düse einer Kraftstoff-Zapfpistole aufweist, und der Art, bei der Verschlussmittel (32) zum Verschließen der oberen Öffnung (18) vorgesehen sind, wobei die Füllvorrichtung ein Kontaktelement (46, 60) aufweist, das aus einem elektrisch leitenden Material besteht, das mit der elektrischen Masse des Fahrzeuges elektrisch verbunden ist und das auf Höhe der oberen Öffnung (18) zum Einführen der Zapfpistole angeordnet ist, damit die letztere mit dem Kontaktelement (46, 60) beim Einführen in den Füllkopf (14) in Kontakt gelangt, wobei der Füllkopf (14) eine rohrförmige Tülle (34) aufweist, die im wesentlichen in allgemein axialer Richtung des Füllkopfes (14) gerichtet ist, wobei ein oberes Ende (36) der Tülle (34) die oberen Öffnung (18) zum Einführen der Zapfpistole begrenzt und ein unteres Ende der Tülle im Inneren des Füllkopfes (14) mündet, **dadurch gekennzeichnet, dass** das Kontaktelement (46, 60) eine konische Fläche (50) aufweist, die einen Trichter bildet und die eine Führungsfläche zum Führen der Düse der Zapfpistole bildet.

2. Füllvorrichtung nach Anspruch 1, **dadurch gekennzeichnet, dass** das Kontaktelement die Form einer Schale (46) hat, die zumindest teilweise einen oberen Rand (36) der Tülle (34) bedeckt.

3. Füllvorrichtung nach Anspruch 2, **dadurch gekennzeichnet, dass** die Verriegelungsmittel eine Klappe (32) aufweisen, die in dem Füllkopf schwenkbar gelagert ist zwischen einer Schließstellung, in der sie von der Tülle (34) abgedichtet aufgenommen wird, und einer Öffnungsstellung, in der sie in das Innere des Füllkopfes von der Zapfpistole eingefahren wird, welche durch die Tülle hindurch eingeführt wird, und dass die Klappe (32) eine Außenfläche (42) aufweist, auf die die Zapfpistole wirkt, um die Klappe (32) zu öffnen, und die in der Schließstellung der Klappe (32) in Querrichtung in die Tülle 1(34) im wesentlichen auf Höhe der oberen Öffnung (18) nahe der Schale (46) für die Erdung verläuft.

4. Füllvorrichtung nach Anspruch 3, **dadurch gekennzeichnet, dass** die Schale (46) eine konische Fläche (50) aufweist, die einen Trichter bildet und die durch eine zylindrische Schürze (52) verlängert ist, welche sich axial ins Innere der Tülle (34) erstreckt, und dass die Außenfläche (42) der Klappe (32) auf Höhe der zylindrischen Schürze (52) so verläuft, dass die konische Fläche (50) der Schale die Zapfpistole ins Innere der Tülle (34) in Richtung der Außenfläche (42) der Klappe (32) führt.

5. Füllvorrichtung nach einem der Ansprüche 2 bis 4, **dadurch gekennzeichnet, dass** die Schale (46) einen Querflansch (48) aufweist, der radial nach außen verläuft und der axial zwischen einer oberen Querfläche (44) des Füllkopfes (14) und einer Innenfläche (21) eines Verkleidungsbleches (22) angeordnet ist, welches mit der Fahrzeugkarosserie fest verbunden ist und welches mit einer Öffnung (30) versehen ist, in der die obere Öffnung (18) der Tülle (34) des Füllkopfes (14) mündet.

6. Füllvorrichtung nach Anspruch 1, **dadurch gekennzeichnet, dass** das Kontaktelement die Form eines Einsatzes (70) hat, der von der Tülle des Füllkopfes (14) umgossen ist.

7. Füllvorrichtung nach Anspruch 6, **dadurch gekennzeichnet, dass** die Verschlussmittel einen Stopfen aufweisen, der von außen in die Tülle (34) eingeführt wird und der zu seiner Festlegung in der Schließstellung mit Verankerungsmitteln (60) zusammenwirkt, die radial in das Innere der Tülle (34) verlaufen und die einstückig mit dem Einsatz (70) ausgebildet sind.

8. Füllvorrichtung nach Anspruch 7, **dadurch gekennzeichnet, dass** der Stopfen in der Schließstellung durch zwei Nasen festgelegt ist, die radial nach innen verlaufen und die mit inneren querverlaufenden Flächen (76) zweier Rampen (60) des Einsatzes (70) zusammenwirken, welche auf einem Kreisbogen radial ins Innere der Tülle (34) verlaufen und die durch zwei Freiräume (64) getrennt sind, welche den Durchtritt der Nasen beim Einführen des Stopfens in die Tülle (34) ermöglichen.

9. Füllvorrichtung nach einem der Ansprüche 6 bis 8, **dadurch gekennzeichnet, dass** der Einsatz (70) einen Kontaktabschnitt (72) aufweist, der sich radial nach außen außerhalb der Tülle (34) erstreckt und der mit der Fahrzeugmasse elektrisch verbunden ist.
